# FASCICULE DE BREVET EUROPEEN

(11) **EP 3 692 614 B1**
(45) Date de publication et mention de la délivrance du brevet: **07.12.2022**
(21) Numéro de dépôt: 18774086.5
(22) Date de dépôt: 02.10.2018
(51) Int. Cl.: H02G 3/04

(54) **HARNAIS DE LIAISON ELECTRIQUE MONOLITIQUE A RIGIDITE ADAPTEE**
MONOLITHISCHER ELEKTRISCHER VERBINDUNGSGURT MIT ANGEPASSTER STARRHEIT
MONOLITHIC ELECTRICAL CONNECTION HARNESS WITH ADAPTED RIGIDITY

(30) Priorité: 05.10.2017 FR 1759324
(43) Date de publication de la demande: 12.08.2020
(73) Titulaire: Latelec, 31670 Labege Occitanie (FR)
(72) Inventeur: PERRIER, Christophe, 31200 Toulouse Occitaine (FR); SIMON, Alexandre, 31500 Toulouse Occitaine (FR)
(74) Mandataire: Junca, Eric
(86) Numéro de dépôt international: PCT/EP2018/076877
(87) Numéro de publication internationale: WO 2019/068743

(56) Documents cités:
- WO-A1-2012/091174
- WO-A1-2014/009231
- WO-A1-2014/070851
- JP-A- 2008 226 587
- JP-A- 2010 045 900
- JP-A- 2012 171 476
- JP-A- 2015 088 397
- US-A1- 2014 076 628
- US-A1- 2014 087 171

## Description

### DOMAINE TECHNIQUE

L'invention concerne un harnais de liaison électrique monolithique présentant une rigidité adaptée, un tel harnais pouvant être utilisé dans des conditions d'environnement sévère, en particulier pour constituer les liaisons électriques des systèmes avioniques, par exemple des actionneurs de train d'atterrissage. L'invention se rapporte également à un procédé de réalisation d'un harnais équipé de raccords arrière spécifiques.

Le domaine général de l'invention est celui de la protection des câbles électriques destinés à subir de fortes contraintes, tant mécaniques que thermiques ou hygrométriques, tout en permettant la prise en compte de la protection EMI (protection contre les Interférences Electromagnétiques). Classiquement, la fonction de protection du harnais constitué par ces câbles est réalisée par un harnais constitué d'un ensemble de conduits souples (ci-après dénommés gaines) et de conduits rigides, couplés entre eux par des raccords de transition où leur solidarisation est opérée (par soudage, vissage, collage, etc.). Des raccords de dérivation (primaire, secondaire, ...) utilisent des pièces de transition pour coupler, également par raccordement, une gaine principale à des gaines d'alimentation électrique d'organes de commande de différents équipements d'une entité fonctionnelle autonome donnée (robot, véhicule, machine-outil, etc.).

Aux extrémités de cet ensemble de protection, des raccords arrière spécifiques (« backshells » en terminologie anglaise) permettent la reprise du blindage des conduits par sur-tressage, et celle du blindage des câbles par des tresses de masse. Les gaines et conduits de protection sont ainsi composées de maillons successifs ayant chacun une rigidité spécifique.

Dans le cas d'un aéronef, les organes de commande sont répartis dans différents systèmes (actionneurs du train d'atterrissage; compresseurs du système de conditionnement d'air; pompes du système d'alimentation en kérosène des moteurs; pompes des circuits hydrauliques du système de pressurisation; actionneurs de dégivrage, de ventilation; les équipements du système cabine, etc.).

### ETAT DE LA TECHNIQUE

Les solutions actuelles imposent une rigidité spécifique à chaque composant de l'ensemble de protection du harnais et un nombre important de composants, alors que les allocations de cheminement des harnais de câblage sont en général de plus en plus réduites. Par exemple, dans le cas d'un aéronef, ces cheminements sont localisés le long d'un cadre de structure en général en matériau composite monté sur la peau d'avion, elle-même en matériau composite. Ces solutions entraînent alors un poids important pour réaliser la fonction de protection et un nombre important de références à gérer.

Il est par exemple connu du brevet US 7 135 790 un harnais électrique modulaire pour train d'atterrissage d'avion à réaction. Ce système de câblage modulaire comporte un sous-assemblage principal de liaison du fuselage aux autres sous-assemblages, ce sous-assemblage principal ayant une connexion au fuselage et deux connexions formant une jonction en « Y » à une extrémité distale. Ces connexions relient respectivement le sous-assemblage principal à un sous-assemblage de suivi de décollage des roues et à un sous-assemblage de suivi de température des freins. Ce dernier sous-assemblage est connecté à un sous-assemblage anti-dérapage. Les sous-assemblages forment une structure tubulaire rigide recouverte de manchons résistants à l'abrasion.

Par ailleurs, le document FR 2 779 800 prévoit la mise en place d'une gaine de protection pour câbles résistante aux chocs, souple et étanche. Cette gaine se compose d'éléments tubulaires indépendants et emboités entre eux de sorte à permettre une adaptation de configuration par pivotement ou déplacement axial des uns par rapport aux autres. Chaque élément comporte deux tronçons, un premier tronçon pourvu d'une gorge annulaire et un second tronçon muni d'un bourrelet annulaire de sorte à s'engager de force dans la gorge d'un élément adjacent. Une telle adaptation reste très limitée et ne garantit pas de protection dans des conditions sévères de mise en œuvre.

Dans le document US 2013248246, le harnais de câblage comprend un premier tronçon central de transmission de puissance relié en extrémités à deux tronçons secondaires via des portions de connexion. Le premier tronçon de transmission de puissance possède une rigidité permettant une rétention autonome de sa forme courbée à partir d'un état d'extension rectiligne, alors que les tronçons secondaires présentent une flexibilité élevée de sorte qu'ils peuvent être aisément courbés et maintenus ainsi par des brides de fixation. Le premier tronçon comporte des conducteurs en aluminium ou en alliage d'aluminium de section circulaire ou rectangulaire, recouverts d'un isolant, d'une couche de protection commune et d'une gaine moulée par extrusion. Et les tronçons secondaires se composent de conducteurs de type à fils torsadés recouverts d'un isolant, d'une gaine commune de protection EMI libre (non moulée) et, en option, d'un tube ondulé isolant. Autres documents pertinents sont WO2012/091174A1, WO2014/009231 A1, US2014/076628A1 et US2014/087171A1.

Une telle solution ne permet pas de constituer un harnais monolithique sans connecteur intermédiaire entre des tronçons de rigidité différentes, et donc apte à être utilisé dans des conditions d'environnement sévère.

### EXPOSE DE L'INVENTION

L'invention vise à palier les inconvénients de l'état de la technique, en particulier elle vise à diminuer le nombre de composants constituant le harnais, avec le nombre correspondant de références à gérer, à réduire le poids des moyens dédiés à la protection du harnais tout permettant une utilisation dans des conditions d'environnement sévère générant de fortes contraintes.

Pour ce faire, l'invention prévoit d'adapter la rigidité de la protection du harnais au niveau de contrainte de l'environnement en utilisant une matrice en matériau de protection souple de type joint d'étanchéité élastomère tout le long du harnais et en raidissant la matrice par un drapage de renforts de type adapté à la fonction souhaitée (robustesse, rigidité, type de protection).

Plus précisément, la présente invention a pour objet un harnais de liaison électrique selon la revendication 1.

Dans ces conditions, le harnais est dit « monolithique » en se présentant en une seule pièce sensiblement homogène qui intègre une gaine de renfort adaptée à la rigidité souhaitée dans les différentes zones du harnais. Cette adaptation aux besoins et aux contraintes de ces zones (résistance aux impacts, à l'érosion, robustesse, raideur, protection anti-feu, etc.) est satisfaite par le nombre de couches de fibres, le type et l'assemblage de fibres utilisés dans la ou chaque couche. Ce harnais présente également l'avantage de pouvoir être aisément interchangeable et d'être remplacé rapidement, en d'autres termes d'être considéré comme une unité de type LRU (acronyme de « line replaceable unit » en terminologie anglaise).

Selon des modes de réalisation préférés :
- le faisceau de câbles de liaison électrique intègre une gaine métallique de protection EMI desdits câbles, cette gaine métallique étant insérée sous l'enveloppe souple du faisceau de câbles, avec la possibilité d'adhérer à cette enveloppe, et connectée auxdits raccords arrière;
- la gaine métallique de protection EMI possède une face glissante tournée du côté des câbles;
- la matrice est constituée par un matériau polymère choisi parmi un caoutchouc (naturel ou de synthèse), un élastomère thermoplastique, un silicone, un fluoro-silicone et un polyéthylène-propylène;
- les fibres de renfort en robustesse sont choisies parmi les fibres de verre, d'aramide, de bambou ou plus généralement une fibres végétales, et de basalte, les fibres de renfort en raideur étant de préférence des fibres de carbone, de carbure de silicium ou équivalent;
- au moins un insert de renfort est intégré dans la gaine de renfort entre deux couches de matériau composite;
- l'insert de renfort est en matériau choisi parmi un matériau thermoplastique, un alliage métallique et un matériau composite;
- un film anti-adhérant est disposé entre le faisceau de câbles et la gaine de renfort afin d'éviter l'adhérence de la matrice de la gaine sur ledit faisceau;
- le film anti-adhérant est un film en matériau choisi parmi un matériau en matière thermoplastique, en téflon et en polyester;
- une couche de matériau composite anticorrosion forme un recouvrement externe de la gaine de renfort;
- la gaine de renfort comporte au moins une couches de matériau composite intégrant, depuis le faisceau de câbles, un tissu de fibres d'aramide de renfort en robustesse, un tissu de carbone de renfort en raideur et/ou un tissu de fibres de verre anticorrosion;
- les moyens de maintien sont constitués par des colliers de serrage.

L'invention se rapporte également à un procédé de réalisation d'un harnais selon la revendication 12.

Avantageusement, les étapes supplémentaires suivantes peuvent être suivies:
- réitérer le drapage avec d'autres types de fibres pour former d'autres couches de renfort, l'ensemble de ces couches formant la gaine de renfort;
- avant de positionner l'enveloppe souple, agencer une gaine métallique de protection EMI sur les câbles et connecter cette gaine de protection EMI sur les raccords arrière;
- agencer un film anti-adhérant sur l'enveloppe souple du faisceau de câbles afin d'éviter l'adhérence de la gaine de renfort sur ledit faisceau;
- former et installer au moins un insert annulaire entre deux couches de la gaine de renfort.

### PRESENTATION DES FIGURES

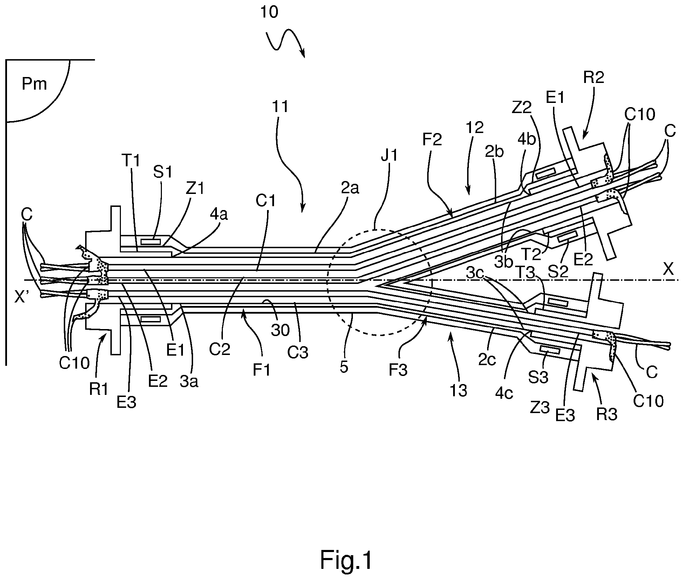

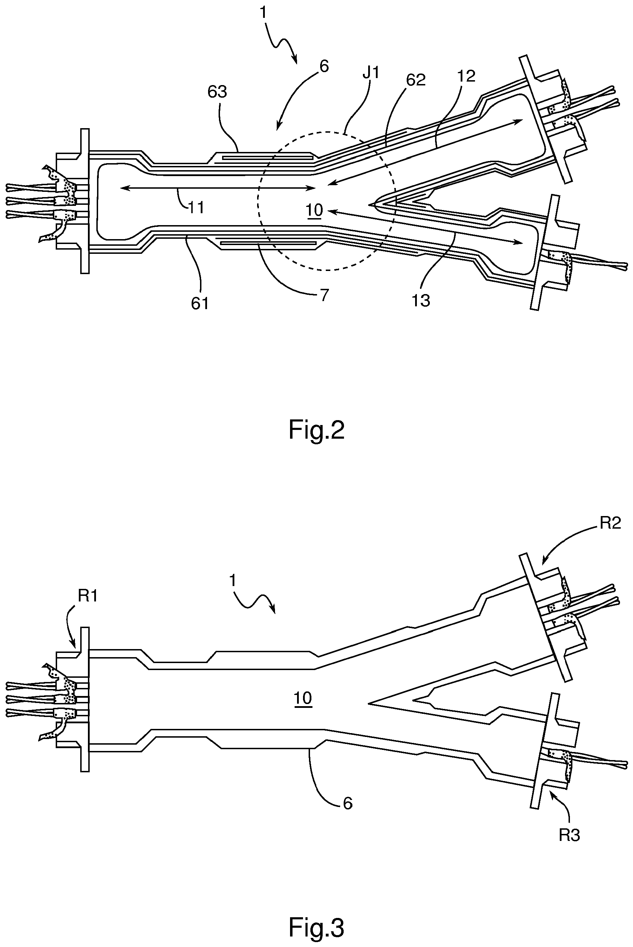

D'autres aspects et particularités de la mise en œuvre de l'invention apparaîtront à la lecture de la description détaillée qui suit, accompagnée de dessins annexés qui représentent, respectivement :
- en figure 1, une vue en coupe longitudinale d'un exemple de structure de base de harnais avec une jonction en « Y » et des raccords arrière aux extrémités;
- en figure 2, une vue en coupe de l'exemple de harnais selon la figure 1 avec une gaine de protection selon l'invention, et
- en figure 3, une vue en coupe longitudinale de l'exemple de harnais selon l'invention après cuisson.

### DESCRIPTION DETAILLEE

Des signes de référence identiques ou présentant une racine commune, utilisés dans les différentes figures, se rapportent à un même élément identique. Le terme « longitudinal » qualifie des éléments s'étendant selon une direction une direction ou une dimension principale.

En référence à la coupe longitudinale de la figure 1, apparaît la structure de base 10 d'un harnais de liaison électrique dans un plan médian « Pm », ce harnais étant destiné à équiper l'architecture électrique d'un avion. Une telle structure de base 10 s'étend longitudinalement le long de l'axe X'X dans un tronçon principal 11 et présente une jonction J1 en « Y » qui sépare ce tronçon principal 11 en deux tronçons secondaires 12 et 13. Ladite structure de base 10 comporte un faisceau F1 intégrant des câbles de liaison électrique blindés C1 à C3 enserrés dans une enveloppe en matière thermoplastique souple et isolante 2a. Les extrémités de chaussettes de blindage C10 des câbles C1 à C3 viennent de liaison depuis des raccords arrière R1 à R3. Les mêmes câbles sans leur blindage « C » apparaissent également hors des chaussettes de blindage C10.

Dans les tronçons secondaires 11 et 12, le faisceau F1 se partage en deux faisceaux secondaires F2 et F3 au niveau de la jonction J1. Le faisceau F2 porte les câbles C1 et C2 et le faisceau F3 le câble C3, ces faisceaux secondaires F2 et F3 étant enserrés respectivement dans des prolongements 2b et 2c de ladite enveloppe 2a.

Les raccords arrière R1 à R3 intègrent des zones d'extrémité E1 à E3 desdits câbles C1 à C3. Au niveau de ces raccords R1 à R3, des colliers de serrage S1 à S3 enserrent et fixent respectivement des zones d'extrémité Z1 à Z3 de ladite enveloppe 2a et de ses prolongements 2b, 2c autour de portions tubulaires T1 à T3 des raccords R1 à R3.

Dans cette structure de base de harnais 10, une gaine métallique de protection contre EMI 3a des câbles C1 à C3 avec ses prolongements 3b, 3c sont avantageusement insérées respectivement sous l'enveloppe souple isolante 2a et ses prolongements 2b, 2c. Cette gaine métallique de protection EMI 3a et ses prolongements 3b, 3c sont, dans cet exemple, respectivement adhérisés à ladite enveloppe souple 2a et à ses prolongements 2b, 2c, et possèdent, sur leur face 30 tournée du côté des câbles C1 à C3, un revêtement glissant. Ladite gaine métallique de protection 3a et ses prolongements 3b, 3c sont respectivement connectés en leurs extrémités 4a à 4c aux portions tubulaires T1 à T3 desdits raccords arrière R1 à R3.

Avantageusement, un film thermoplastique anti-adhérant 5 est disposé sur l'enveloppe souple et isolante 2a et ses prolongements 2b, 2c, afin d'éviter l'adhérence d'une gaine de renfort 6 telle que mise en place en référence à la figure 2. La gaine de renfort 6 entoure alors extérieurement la structure de base 10 pour former le harnais 1. Cette gaine de renfort 6 se compose successivement, dans l'exemple, de trois couches composites superposées 61 à 63, formées d'une matrice souple en élastomère de caoutchouc synthétique - classiquement utilisée pour réaliser des joints adaptés aux portes d'avion dans cet exemple - et de plis de fibres de renfort sous forme de tissus de fils de fibres tressées, les tissus étant drapés dans la matrice le long des faisceaux de câbles F1 à F3 (cf. figure 1).

Le harnais 1 étant plus particulièrement destiné à être inséré dans une zone où des contraintes anticorrosion, des besoins de raideur et de robustesse sont plus particulièrement à observer, les couches composites 61 à 63 intègrent respectivement: un tissu de fibres d'aramide de renfort en robustesse de la matrice, un tissu de carbone de renfort en raideur de la matrice - la couche de renfort correspondante 62 étant localisée autour de la jonction J1 - et un tissu de fibres de verre anticorrosion. Alternativement, les plis peuvent être constitués de nappes unidirectionnelles ou multidirectionnelles de fibres suivant le niveau de contrainte anticorrosion, en raideur et en robustesse.

De plus, un insert de renfort 7 est avantageusement intégré entre la couche composite de renfort en raideur 62 et la couche composite anticorrosion 63. Cet insert 7 peut être constitué en matériau composite, comme dans cet exemple où il est constitué d'un anneau en matériau de matrice céramique et d'une nappe multidirectionnelle de fibres de carbone. Alternativement, l'insert de renfort peut être constitué d'un anneau métallique, par exemple en alliage d'aluminium ou de titane. Un tel insert permet ici de renforcer la résistance mécanique du tronçon principal 11 du harnais 1 juste avant la jonction J1 en « Y » qui prolonge ce tronçon principal 11 des deux tronçons secondaires 12 et 13.

L'invention se rapporte également à un procédé de réalisation d'un harnais de liaison électrique selon la revendication 1.

Un tel procédé prévoit, dans une première étape, de positionner les zones d'extrémité de câbles dans des raccords arrière, tout en maintenant sur ces raccords les extrémités d'une enveloppe souple enserrant les câbles. Avantageusement, avant de positionner les extrémités de l'enveloppe souple, une gaine métallique de protection EMI, de type des gaines 3a à 3c (cf. figure 1), peut être installée sur les câbles et cette gaine de protection EMI est connectée sur les raccords arrière. Dans l'exemple de la figure 1, des colliers de serrage S1 à S3 enserrent respectivement des zones d'extrémité Z1 à Z3 de l'enveloppe souple 2a et de ses prolongements 2b, 2c autour de portions tubulaires T1 à T3 des raccords R1 à R3. La gaine de protection EMI 3a intégrée dans le faisceau de câbles F1 se prolonge par les gaines de protection EMI 3b et 3c dans les faisceaux F2 et F3.

Avantageusement, un film anti-adhérant 5 peut être installé sur l'enveloppe souple 2a du faisceau de câbles F1 afin d'éviter l'adhérence de la matrice déposée à l'étape suivante.

Le procédé se poursuit en entourant le faisceau de câbles d'une matrice souple similaire à une matrice de matériau composite. Dans l'exemple illustré précédemment, la matrice est constituée d'une matière en élastomère, plus précisément d'un élastomère de caoutchouc synthétique, entourant les faisceaux F1 à F3 de câbles C1 à C3 (cf. figure 1).

De manière similaire à la réalisation de matériau composite, la matrice est drapée par imprégnation d'un pli de fibres de renfort le long du faisceau de câbles pour former au moins une couche de renfort, du type des couches 61 à 63 de l'exemple illustré précédemment. Avantageusement, ce drapage est réitéré avec d'autres types de fibres pour former d'autres couches de renfort, la couche ou l'ensemble de ces couches formant une gaine de renfort 6. Dans l'exemple de la figure 2, la gaine de renfort 6 est constituée des trois couches de renfort 61 et 63. Les fibres se présentent sous forme de nappe uni- ou multidirectionnelle, de nappe pré-tissée ou encore pré-imprégnée de matériau polymère formant la matrice.

Avantageusement, au moins un insert annulaire peut être formé et installé entre deux couches de la gaine de renfort 6. Dans l'exemple de la figure 2, l'insert annulaire 7 est installé entre la couche composite de renfort en raideur 62 et la couche composite anticorrosion 63.

L'étape suivante consiste à réaliser le surmoulage par cuisson du harnais et réticulation de la gaine de renfort. En référence à la figure 3, cette réticulation concerne l'ensemble des couches de renfort qui fusionne autour de la structure de base de harnais 10 pour former la gaine de renfort 6. Cette cuisson peut être opérée sous presse chauffante, avec une pression de quelques bars ou au four, ou encore sous vide, à la température de réticulation adaptée à la matrice.

Enfin, le harnais 1 est positionné selon le parcours prévu dans l'architecture électrique et les raccords arrière R1 à R3 sont connectés. Dans l'exemple de réalisation, le harnais 1 est positionné dans l'environnement prévu par l'architecture électrique de l'avion et les raccords R1 à R3 sont connectés en extrémité aux unités de commande électrique des équipements prévus.

L'invention n'est pas limitée aux exemples de réalisation décrits ou représentés. Il est par exemple possible de prévoir des connecteurs intermédiaires. Par ailleurs, la solidarisation aux raccords peut être réalisée par tout moyen connu: vissage, rivetage, bridage, soudure, brasage ou tout moyen équivalent. En outre, les fibres assemblées en nappe multidirectionnelle peuvent être distribuées « en vrac » dans la nappe. De plus, l'épaisseur des couches composites peut varier pour être adaptée à leur fonction de renfort propre. D'autres types de fibre peuvent également être utilisées: des fibres en céramique, kevlar^{®}, de carbone, de bambou, de basalte, de verre, etc.

## Revendications

1. Harnais de liaison électrique (1) présentant une rigidité adaptée au niveau de contrainte de l'environnement cheminant le long de zones d'un parcours déterminé, comportant une enveloppe isolante souple (2a à 2c) insérant des câbles de liaison électrique blindés (C1 à C3) pour constituer un faisceau (F1 à F3), des moyens de maintien (S1 à S3) des extrémités (Z1 à Z3) de ladite enveloppe souple (2a à 2c) sur des raccords arrière (R1 à R3) intégrant des zones d'extrémité (E1 à E3) des câbles (C1 à C3), et **caractérisé en ce que** le harnais est monolithique et comprend une gaine de renfort (6) entourant le faisceau de câbles (F1 à F3) et composée d'un matériau composite formé d'une matrice souple en matériau polymère et d'une ou plusieurs couches (61 à 63) formée d'un pli de fibres de renfort en robustesse et/ou en raideur drapé le long du faisceau de câbles (F1 à F3), les fibres de renfort étant assemblées dans chaque pli, sous une forme choisie entre une nappe unidirectionnelle, une nappe multidirectionnelle et un tissu de fils formés de fibres tressées, le nombre de couches (61 à 63), le type et l'assemblage de fibres utilisés dans chaque couche étant adaptés aux besoins et contraintes des zones.

2. Harnais de liaison selon la revendication 1, dans lequel le faisceau (F1 à F3) de câbles de liaison électrique (C1 à C3) intègre une gaine métallique de protection EMI (3a à 3c) desdits câbles (C1 à C3), cette gaine métallique (3a à 3c) étant insérée sous l'enveloppe souple (2a à2c) du faisceau de câbles (F1 à F3) et connectée auxdits raccords arrière (R1 à R3).

3. Harnais de liaison selon la revendication précédente, dans lequel la gaine métallique de protection EMI (3a à 3c) possède une face glissante (30) tournée du côté des câbles (C1 à C3).

4. Harnais de liaison selon l'une quelconque des revendications précédentes, dans lequel la matrice est constituée par un matériau polymère choisi parmi un caoutchouc (naturel ou de synthèse), un élastomère thermoplastique, un silicone, un fluoro-silicone et un polyéthylène-propylène.

5. Harnais de liaison selon l'une quelconque des revendications précédentes, dans lequel les fibres de renfort sont choisies parmi les fibres de verre, de carbone, d'aramide, de bambou et de basalte.

6. Harnais de liaison selon l'une quelconque des revendications précédentes, dans lequel au moins un insert de renfort (7) est intégré dans la gaine de renfort (6) entre deux couches de matériau composite (61 à 63).

7. Harnais de liaison selon la revendication précédente, dans lequel l'insert de renfort (7) est en matériau choisi parmi un matériau thermoplastique, un alliage métallique et un matériau composite.

8. Harnais de liaison selon l'une quelconque des revendications précédentes, dans lequel un film anti-adhérant (5) est disposé entre le faisceau de câbles (F1 à F3) et la gaine de renfort (6) afin d'éviter l'adhérence de la gaine de renfort (6) sur ledit faisceau (F1 à F3).

9. Harnais de liaison selon la revendication précédente, dans lequel le film anti-adhérant (5) est un film en matériau choisi parmi un matériau en matière thermoplastique, en téflon et en polyester.

10. Harnais de liaison selon l'une quelconque des revendications précédentes, dans lequel une couche de matériau composite anticorrosion (63) forme un recouvrement externe de la gaine de renfort (6).

11. Harnais de liaison selon l'une quelconque des revendications précédentes, dans lequel la gaine de renfort (6) comporte au moins une couche de matériau composite (61 à 63) intégrant, depuis le faisceau de câbles (F1 à F3), un tissu de fibres d'aramide de renfort en robustesse, un tissu de carbone de renfort en raideur et/ou un tissu de fibres de verre anticorrosion.

12. Procédé de réalisation d'un harnais entre deux raccords arrière spécifiques, **caractérisé en ce qu'**il comporte les principales étapes suivantes:
- positionner les zones d'extrémité (E1 à E3) de câbles (C1 à C3) dans des raccords arrière (R1 à R3) tout en maintenant les extrémités (Z1 à Z3) d'une enveloppe souple (2a à 2c) enserrant les câbles (C1 à C3) sur les raccords (R1 à R3);
- entourer le faisceau de câbles (F1 à F3) d'une matrice de polymère similaire à une matrice de matériau composite;
- draper la matrice par imprégnation d'une ou plusieurs couches (61 à 63) formée d'un pli de fibres de renfort en robustesse et/ou en raideur le long du faisceau de câbles (F1 à F3) pour former une gaine de renfort (6), les fibres de renfort étant assemblées dans chaque pli sous une forme choisie entre une nappe unidirectionnelle, une nappe multidirectionnelle et un tissu de fils formés de fibres tressées, le nombre de couches, le type de fibres et d'assemblage des fibres sont adaptés aux besoins et contraintes de différentes zones du harnais;
- procéder au surmoulage par cuisson du harnais (1) et réticulation des polymères de la gaine de renfort (6), et
- positionner le harnais (1) selon la configuration prévue et connecter les raccords arrière (R1 à R3).

13. Procédé de réalisation selon la revendication précédente, dans lequel le drapage est réitéré avec d'autres types de fibres pour former d'autres couches de renfort (61 à 63), l'ensemble de ces couches (61 à 63) formant la gaine de renfort (6).

14. Procédé de montage selon l'une quelconque des revendications 12 ou 13, dans lequel, avant de positionner l'enveloppe souple (2a à 2c), une gaine métallique de protection EMI (3a à 3c) est agencée sur les câbles (C1 à C3) et cette gaine de protection EMI (3a à 3c) est connectée sur les raccords arrière (R1 à R3).

15. Procédé de montage selon l'une quelconque des revendications 12 à 14, dans lequel un film anti-adhérant (5) est agencé sur l'enveloppe souple (2a à 2c) du faisceau de câbles (F1 à F3) afin d'éviter l'adhérence de la gaine de renfort (6) sur ledit faisceau (F1 à F3).

16. Procédé de montage selon l'une quelconque des revendications 13 à 15, dans lequel au moins un insert annulaire (7) est formé et installé entre deux couches (61 à 63) de la gaine de renfort (6).

## Patentansprüche

1. Elektrischer Verbindungskabelbaum (1), welcher eine an das Beanspruchungsniveau der Umgebung angepasste Steifigkeit aufweist, entlang von Bereichen einer bestimmten Wegstrecke verläuft und eine flexible isolierende Hülle (2a bis 2c), in die geschirmte elektrische Verbindungskabel (C1 bis C3) eingesetzt sind, um ein Bündel (F1 bis F3) zu bilden, sowie Mittel zum Halten (S1 bis S3) der Enden (Z1 bis Z3) der flexiblen Hülle (2a bis 2c) an hinteren Anschlüssen (R1 bis R3), in die Endbereiche (E1 bis E3) der Kabel (C1 bis C3) integriert sind, aufweist,
**dadurch gekennzeichnet, dass** der Kabelbaum monolithisch ist und einen Verstärkungsmantel (6) umfasst, der das Kabelbündel (F1 bis F3) umgibt und aus einem Verbundmaterial besteht, das von einer flexiblen Matrix aus Polymermaterial und von einer oder mehreren Schichten (61 bis 63) gebildet wird, die von einer Lage Fasern zur Verstärkung der Widerstandsfähigkeit und/oder der Steifigkeit gebildet werden, die entlang des Kabelbündels (F1 bis F3) drapiert ist, wobei die Verstärkungsfasern in jeder Lage in einer Form zusammengefügt sind, die aus einem unidirektionalen Gelege, einem multidirektionalen Gelege und einem Gewebe aus von geflochtenen Fasern gebildeten Fäden ausgewählt ist, wobei die Anzahl der Schichten (61 bis 63), der Typ und die Zusammenfügung der Fasern, die in jeder Schicht verwendet werden, an die Erfordernisse und Beanspruchungen der Bereiche angepasst sind.

2. Verbindungskabelbaum nach Anspruch 1, wobei das Bündel (F1 bis F3) von elektrischen Verbindungskabeln (C1 bis C3) einen Metallmantel für den EMI-Schutz (3a bis 3c) der Kabel (C1 bis C3) aufweist, wobei dieser Metallmantel (3a bis 3c) unter der flexiblen Hülle (2a bis 2c) des Kabelbündels (F1 bis F3) eingefügt ist und mit den hinteren Anschlüssen (R1 bis R3) verbunden ist.

3. Verbindungskabelbaum nach dem vorhergehenden Anspruch, wobei der Metallmantel für den EMI-Schutz (3a bis 3c) eine gleitfähige Seite (30) besitzt, die den Kabeln (C1 bis C3) zugewandt ist.

4. Verbindungskabelbaum nach einem der vorhergehenden Ansprüche, wobei die Matrix aus einem Polymermaterial besteht, das aus einem Kautschuk (Natur- oder Kunstkautschuk), einem thermoplastischen Elastomer, einem Silikon, einem Fluorsilikon und einem Polyethylenpropylen ausgewählt ist.

5. Verbindungskabelbaum nach einem der vorhergehenden Ansprüche, wobei die Verstärkungsfasern aus Glas-, Carbon-, Aramid-, Bambus- und Basaltfasern ausgewählt sind.

6. Verbindungskabelbaum nach einem der vorhergehenden Ansprüche, wobei wenigstens ein Verstärkungseinsatz (7) in den Verstärkungsmantel (6) zwischen zwei Schichten von Verbundmaterial (61 bis 63) integriert ist.

7. Verbindungskabelbaum nach dem vorhergehenden Anspruch, wobei der Verstärkungseinsatz (7) aus einem Material besteht, das aus einem thermoplastischen Material, einer Metalllegierung und einem Verbundmaterial ausgewählt ist.

8. Verbindungskabelbaum nach einem der vorhergehenden Ansprüche, wobei ein Haftschutzfilm (5) zwischen dem Kabelbündel (F1 bis F3) und dem Verstärkungsmantel (6) angeordnet ist, um das Anhaften des Verstärkungsmantels (6) auf dem Bündel (F1 bis F3) zu vermeiden.

9. Verbindungskabelbaum nach dem vorhergehenden Anspruch, wobei der Haftschutzfilm (5) ein Film aus einem Material ist, das aus einem Material aus einem thermoplastischen Stoff, aus Teflon und aus Polyester ausgewählt ist.

10. Verbindungskabelbaum nach einem der vorhergehenden Ansprüche, wobei eine Schicht aus Verbundmaterial zum Korrosionsschutz (63) eine äußere Abdeckung des Verstärkungsmantels (6) bildet.

11. Verbindungskabelbaum nach einem der vorhergehenden Ansprüche, wobei der Verstärkungsmantel (6) mindestens eine Schicht aus Verbundmaterial (61 bis 63) aufweist, in welche, vom Kabelbündel (F1 bis F3) aus gesehen, ein Aramidfasergewebe zur Verstärkung der Widerstandsfähigkeit, ein Kohlenstoffgewebe zur Verstärkung der Steifigkeit und/oder ein Glasfasergewebe zum Korrosionsschutz integriert sind.

12. Verfahren zur Herstellung eines Kabelbaums zwischen zwei speziellen hinteren Anschlüssen, **dadurch gekennzeichnet, dass** es die folgenden Hauptschritte umfasst:
- Positionieren der Endbereiche (E1 bis E3) von Kabeln (C1 bis C3) in hinteren Anschlüssen (R1 bis R3) bei gleichzeitigem Halten der Enden (Z1 bis Z3) einer flexiblen Hülle (2a bis 2c), welche die Kabel (C1 bis C3) umschließt, an den Anschlüssen (R1 bis R3);
- Umgeben des Kabelbündels (F1 bis F3) mit einer Polymermatrix, die einer Verbundmaterialmatrix ähnlich ist;
- Drapieren der Matrix durch Imprägnierung einer oder mehreren Schichten (61 bis 63), die von einer Lage Fasern zur Verstärkung der Widerstandsfähigkeit und/oder der Steifigkeit gebildet werden, entlang des Kabelbündels (F1 bis F3), um einen Verstärkungsmantel (6) zu bilden, wobei die Verstärkungsfasern in jeder Lage in einer Form zusammengefügt sind, die aus einem unidirektionalen Gelege, einem multidirektionalen Gelege und einem Gewebe aus von geflochtenen Fasern gebildeten Fäden ausgewählt ist, wobei die Anzahl der Schichten, der Fasertyp und die Zusammenfügung der Fasern an die Erfordernisse und Beanspruchungen verschiedener Bereiche des Kabelbaums angepasst werden;
- Durchführen des Überformens des Kabelbaums (1) durch Brennen und Vernetzung der Polymere des Verstärkungsmantels (6), und
- Positionieren des Kabelbaums (1) gemäß der vorgesehenen Konfiguration und Verbinden der hinteren Anschlüsse (R1 bis R3).

13. Verfahren zur Herstellung nach dem vorhergehenden Anspruch, wobei die Drapierung mit anderen Fasertypen wiederholt wird, um andere Verstärkungsschichten (61 bis 63) zu bilden, wobei die Gesamtheit dieser Schichten (61 bis 63) den Verstärkungsmantel (6) bildet.

14. Montageverfahren nach einem der Ansprüche 12 oder 13, wobei vor dem Positionieren der flexiblen Hülle (2a bis 2c) ein Metallmantel für den EMI-Schutz (3a bis 3c) auf den Kabeln (C1 bis C3) angebracht wird und dieser Mantel für den EMI-Schutz (3a bis 3c) an die hinteren Anschlüsse (R1 bis R3) angeschlossen wird.

15. Montageverfahren nach einem der Ansprüche 12 bis 14, wobei ein Haftschutzfilm (5) auf der flexiblen Hülle (2a bis 2c) des Kabelbündels (F1 bis F3) angebracht wird, um das Anhaften des Verstärkungsmantels (6) auf dem Bündel (F1 bis F3) zu vermeiden.

16. Montageverfahren nach einem der Ansprüche 13 bis 15, wobei wenigstens ein ringförmiger Einsatz (7) gebildet und zwischen zwei Schichten (61 bis 63) des Verstärkungsmantels (6) eingebaut wird.

## Claims

1. A electrical connection harness (1) having an adapted rigidity following a predetermined path, including a flexible insulating jacket (2a to 2c) with the insertion of shielded electrical connection cables (C1 to C3) to form a bundle (F1 to F3), holding means (S1 to S3) for holding the ends (Z1 to Z3) of said flexible jacket (2a to 2c) on rear fittings (R1 to R3) incorporating end zones (E1 to E3) of the cables (C1 to C3), and **characterized in that** the harness is monolithic and comprises a reinforcing sheath (6) surrounds the bundle (F1 to F3) of cables and is composed of a composite made up of a flexible polymer matrix and one or more layers (61 to 63) made up of a ply of reinforcing fibers for reinforcement in terms of robustness and/or stiffness, laid along the bundle (F1 to F3) of cables, the reinforcing fibers being assembled in each ply in a form selected between a unidirectional sheet, a multidirectional sheet and a fabric of threads formed of braided fibers.

2. The connection harness as claimed in claim 1, wherein the bundle (F1 to F3) of cables for electrical connection (C1 to C3) incorporates a metal sheath for EMI shielding (3a to 3c) of said cables (C1 to C3), this metal sheath (3a to 3c) being inserted under the flexible jacket (2a to 2c) of the bundle of cables (F1 to F3) and connected to said rear fittings (R1 to R3).

3. The connection harness as claimed in the preceding claim, wherein the metal EMI shielding sheath (3a to 3c) has a slippery face (30) on the side facing the cables (C1 to C3).

4. The connection harness as claimed in any one of the preceding claims, wherein the matrix consists of a polymer material selected from a rubber (natural or synthetic), a thermoplastic elastomer, a silicone, a fluoro-silicone and a polyethylene-propylene.

5. The connection harness as claimed in any one of the preceding claims, wherein the reinforcing fibers are selected from glass fibers, carbon fibers, aramid fibers, bamboo fibers and basalt fibers.

6. The connection harness as claimed in any one of the preceding claims, wherein at least one reinforcing insert (7) is integrated in the reinforcing sheath (6) between two layers of composite (61 to 63).

7. The connection harness as claimed in the preceding claim, wherein the reinforcing insert (7) is made of a material selected from a thermoplastic material, a metal alloy and a composite.

8. The connection harness as claimed in any one of the preceding claims, wherein a non-stick film (5) is placed between the bundle (F1 to F3) of cables and the reinforcing sheath (6) in order to prevent the reinforcing sheath (6) from sticking to said bundle (F1 to F3).

9. The connection harness as claimed in the preceding claim, wherein the non-stick film (5) is a film made of a material selected from a material made of thermoplastic, Teflon and polyester.

10. The connection harness as claimed in any one of the preceding claims, wherein a layer of anti-corrosion composite (63) forms an external covering of the reinforcing sheath (6).

11. The connection harness as claimed in any one of the preceding claims, wherein the reinforcing sheath (6) comprises at least one layer (61 to 63) of composite incorporating, starting from the bundle (F1 to F3) of cables, a fabric of aramid fibers for reinforcement in terms of robustness, a carbon fabric for stiffness reinforcement and/or an anti-corrosion glass fiber fabric.

12. A method for producing a harness between two specific rear fittings, **characterized in that** it includes the following main steps:
- positioning the cable (C1 to C3) end zones (E1 to E3) in rear fittings (R1 to R3) while holding the ends (Z1 to Z3) of a flexible jacket (2a to 2c), which encloses the cables (C1 to C3), on the fittings (R1 to R3);
- surrounding the bundle (F1 to F3) of cables with a polymer matrix similar to a composite matrix;
- laying up the matrix by impregnation of one or more layers (61 to 63) made up of a ply of reinforcing fibers for reinforcement in terms of robustness and/or stiffness, along the bundle (F1 to F3) of cables to form a reinforcing sheath (6), the reinforcing fibers being assembled in each ply in a form selected between a unidirectional sheet, a multidirectional sheet and a fabric of threads formed of braided fibers;
- overmolding by curing of the harness (1) and crosslinking of the polymers of the reinforcing sheath (6), and
- positioning the harness (1) in the required configuration and connecting the rear fittings (R1 to R3).

13. The production method as claimed in the preceding claim, wherein the laying up is repeated with other types of fibers to form other reinforcing layers (61 to 63), all of these layers (61 to 63) forming the reinforcing sheath (6).

14. The assembly method as claimed in either of claims 12 and 13, wherein, before positioning the flexible jacket (2a to 2c), a metal EMI shielding sheath (3a to 3c) is arranged on the cables (C1 to C3) and this EMI shielding sheath (3a to 3c) is connected to the rear fittings (R1 to R3).

15. The assembly method as claimed in any one of claims 12 to 14, wherein a non-stick film (5) is arranged on the flexible jacket (2a to 2c) of the bundle (F1 to F3) of cables in order to prevent the reinforcing sheath (6) from sticking to said bundle (F1 to F3).

16. The assembly method as claimed in any one of claims 13 to 15, wherein at least one annular insert (7) is formed and installed between two layers (61 to 63) of the reinforcing sheath (6).
